Europäisches Patentamt

European Patent Office

Office européen des brevets

(19)

(11) Veröffentlichungsnummer: **0 504 644 A1**

## (12) EUROPÄISCHE PATENTANMELDUNG

(21) Anmeldenummer: **92103539.0**

(22) Anmeldetag: **02.03.92**

(51) Int. Cl.5: **C05F 11/00, A01G 31/00**

(30) Priorität: **16.03.91 DE 4108675**
**13.09.91 DE 4130468**

(43) Veröffentlichungstag der Anmeldung:
**23.09.92 Patentblatt 92/39**

(84) Benannte Vertragsstaaten:
**AT BE CH DE DK ES FR GB IT LI LU NL**

(71) Anmelder: **ASB GRÜNLAND HELMUT AURENZ
GmbH & CO
Porschestrasse 4
W-7140 Ludwigsburg(DE)**

(72) Erfinder: **Aurenz, Helmut
Porschestrasse 4
W-7140 Ludwigsburg(DE)**

(74) Vertreter: **Hoeger, Stellrecht & Partner
Uhlandstrasse 14 c
W-7000 Stuttgart 1(DE)**

(54) Basismaterial für ein Pflanzenkultursubstrat und Kultursubstrat für Pflanzen.

(57) Um ein Basismaterial für ein Pflanzenkultursubstrat zu schaffen, das im Pflanzenkultursubstrat die erforderlichen vorteilhaften Eigenschaften für ein optimales Pflanzenwachstum hat, wird vorgeschlagen, daß dieses durch mechanisches Zerkleinern hergestellte unvertorfte Pflanzenfasern umfaßt, welche auf ihrer Faseroberfläche mit einer pflanzenwachstumsverbessernden Substanz versehen sind.

EP 0 504 644 A1

Die Erfindung betrifft ein Basismaterial für ein Pflanzenkultursubstrat sowie ein Verfahren zur Herstellung desselben.

Darüber hinaus betrifft die Erfindung ein Kultursubstrat für Pflanzen.

Es ist bekannt, für Pflanzenkultursubstrate Torf zu verwenden, der bestimmte Eigenschaften aufweisen muß, um ein optimales Pflanzenkultursubstrat zu erhalten.

Da Torf nicht in unbegrenzten Mengen zur Verfügung steht und aus Gründen des Umweltschutzes der Torfabbau nicht mehr unbegrenzt erfolgen kann sowie darüber hinaus erhebliche Kosten für Renaturierungsmaßnahmen beim Torfabbau entstehen, liegt der Erfindung die Aufgabe zugrunde, ein Basismaterial für ein Pflanzenkultursubstrat zu schaffen, das im Pflanzenkultursubstrat die erforderlichen vorteilhaften Eigenschaften für ein optimales Pflanzenwachstum hat.

Diese Aufgabe wird erfindungsgemäß durch ein Basismaterial für ein Pflanzenkultursubstrat gelöst, das durch mechanisches Auffasern hergestellte unvertorfte Pflanzenfasern umfaßt, welche auf ihrer Faseroberfläche mit einer pflanzenwachstumsverbessernden Substanz versehen sind.

Der Vorteil des erfindungsgemäßen Basismaterials ist darin zu sehen, daß alle Arten von Pflanzenmaterialien mit hohem Zellulose- und Ligninanteil, insbesondere verholztes Pflanzenmaterial als Ausgangsmaterial verwendet werden können, wobei die für eine Verwendung im Pflanzenkultursubstrat erforderlichen Eigenschaften der Pflanzenfasern dadurch erreicht werden, daß die Pflanzenfasern auf ihrer Oberfläche mit pflanzenwachstumsverbessernden Substanzen versehen sind.

Besonders vorteilhaft ist es, wenn die mechanisch aufgefaserten Pflanzenfasern maschinell durch Einwirkung von Scherkräften bei einer Temperatur von mehr als 60°C hergestellt sind. Bei einer derartig hergestellten Pflanzenfaser ist die Gewähr gegeben, daß eine optimale Auffaserung des Ausgangsmaterials erfolgt und somit die für ein Pflanzenkultursubstrat gewünschte Faserstruktur des Basismaterials vorliegt.

Besonders vorteilhaft läßt sich ein derartiges Auffasern dann durchführen, wenn die maschinell aufgefaserten Pflanzenfasern durch Auffasern von Pflanzenmaterial in einer Extrudervorrichtung hergestellt sind, da die Extrudervorrichtung über Scherkräfte auf das Pflanzenmaterial einwirkt und außerdem aufgrund der Reibung und des Drucks eine Temperatur von mehr als 60° C entsteht, wodurch eine besonders vorteilhafte Faserstruktur entsteht.

Als besonders geeignetes Pflanzenmaterial für die Herstellung der Pflanzenfasern haben sich Rückstände aus holzverarbeitenden Betrieben, aus landwirtschaftlichen und Forstbetrieben, wie beispielsweise Baumrinde, Schwachholz, Äste, insbesondere auch Holzhackschnitzel, Stroh und Pflanzenstengel erwiesen.

Hinsichtlich der Art und Weise, die pflanzenwachstumsverbessernde Substanz auf die Oberfläche der Pflanzenfasern aufzubringen, sind mehrere Vorgehensweisen denkbar. So ist eine vorteilhafte Vorgehensweise darin zu sehen, die pflanzenwachstumsverbessernde Substanz im Verlauf des mechanischen Auffaserns des Pflanzenmaterials auf die Oberfläche der Pflanzenfasern aufzubringen und dadurch gut auf den Pflanzenfasern zu fixieren.

Im Hinblick auf die Art der pflanzenwachstumsverbessernden Substanzen sind die unterschiedlichsten Möglichkeiten denkbar. So sieht eine vorteilhafte Variante des erfindungsgemäßen Basismaterials vor, daß die pflanzenwachstumsverbessernde Substanz basisch wirkende und einen pflanzengerechten pH-Wert der Pflanzenfasern einstellende pflanzenverträgliche Substanzen, umfaßt.

Vorzugsweise können derartige Substanzen kohlensaurer Kalk, Dolomitkalk, Branntkalk, Kalilauge, Natronlauge, Silikatlösungen, wie Wasserglas, alkalisch wirkende Nährsalze und ähnliche Substanzen sein.

Dabei wird mit diesen basisch wirkenden Substanzen vorteilhafterweise ein pH-Wert des Basismaterials zwischen ungefähr 4 und ungefähr 6 eingestellt.

Bei einem weiteren Ausführungsbeispiel des erfindungsgemäßen Basismaterials umfaßt die pflanzenwachstumsverbessernde Substanz alternativ oder ergänzend zu den vorstehend genannten Substanzen die Pflanzenfasern gegen starken mikrobiellen Abbau schützende Substanzen. Dies ist von großem Vorteil, da die Pflanzenfasern in der Regel mikrobiell abbaubare Bestandteile enthalten und ein starker mikrobieller Abbau jedoch bei einem Pflanzenkultursubstrat unerwünscht ist.

Ausführungsbeispiele derartiger, einen starken mikrobiellen Abbau verhindernder Substanzen sind beispielsweise Silikate in fester oder flüssiger Form, wie hochdisperse Kieselsäure, Kunstharze, Pflanzenöle, Kohlenstäube insbesondere Braunkohle, Aschen, Schlacken, Ruß, fungizid oder bakterizid wirkende Substanzen, wobei es sich bei den letzteren um natürlich vorkommende oder chemisch synthetisierte Substanzen handeln kann.

Vorzugsweise sind die die Pflanzenfasern gegen starken mikrobiellen Abbau schützenden Substanzen die Pflanzenfasern mit einem Überzug versehende Substanzen, wobei dieser Überzug einen mikrobiellen Abbau verhindert.

Alternativ oder ergänzend zu den vorstehend genannten pflanzenwachstumsverbessernden Substanzen ist bei einem weiteren Ausführungsbeispiel des erfindungsgemäßen Basismaterial vorgesehen, daß die pflanzenwachstumsverbessernde Substanz die Ionenaustauschkapazität der Pflanzenfasern erhöhende Stoffe umfaßt. Dies ist deshalb besonders von großem Vorteil, da dadurch die chemischen Eigenschaften, insbesondere im Zusammenhang mit einer Düngung, des erfindungsgemäßen Basismaterials erheblich verbessert werden.

Beispiele derartiger die Ionenaustauschkapazität der Pflanzenfasern erhöhenden Stoffe sind beispielsweise montmorillonithaltige Tone, Zeolithe oder auch Kunstharze.

Ein weiteres vorteilhaftes Ausführungsbeispiel eines erfindungsgemäßen Basismaterials sieht als pflanzenwachstumsverbessernde Substanz alternativ oder ergänzend zu den vorstehend genannten Substanzen Pflanzennährstoffträger vor, die ebenfalls auf der Oberfläche der Pflanzenfasern aufgebracht sind.

Derartige Pflanzennährstoffträger können prinzipiell organische und/oder anorganische Substanzen umfassen.

Beispiele derartiger Pflanzennährstoffträger sind beispielsweise Ammoniumsalze, Nitrate, Phosphate, Kalisalze, synthetische organische Stickstoffverbindungen, wie Harnstoff, Formaldehydkondensate, wie Dicyandiamid, Crotonylidendiurea, oder natürliche Stickstoffverbindungen, wie Proteine, stickstoffhaltige Humusstoffe oder Pflanzennährstoffträger tierischer und pflanzlicher Herkunft, wie Gülle, Mist, Hornmehl, Knochenmehl, Guano.

Eine weitere vorteilhafte pflanzenwachstumsverbessernde Substanz sind Spurennährstoffträger, wie Magnesium, Eisen, Kupfer, Zink, Mangan, Molybdän als Salz, als Chelat oder als Metallmehl.

Schließlich sieht ein weiteres bevorzugtes Ausführungsbeispiel eines erfindungsgemäßen Basismaterials alternativ oder ergänzend zu den vorstehend genannten pflanzenwachstumsverbessernden Substanzen noch zusätzlich pflanzenwachstumsstimulierende Substanzen vor. Diese pflanzenwachstumsstimulierenden Substanzen wirken sich direkt auf die Wachstumsaktivität der Pflanze aus. Beispiele derartiger pflanzenwachstumsstimulierender Substanzen sind Huminsäuren in fester oder flüssiger Form, Algenmehl und Algenextrakte in fester oder flüssiger Form, Phytohormone, Vitamine und ähnliche Zugaben.

Als besonders vorteilhaft hat sich Leonardit-Schiefer-Mehl erwiesen, welches einen Huminsäuregehalt von ungefähr 75% aufweist, gleichzeitig den Pflanzenfasern eine braune Farbe verleiht und außerdem eine gute Pufferkraft aufweist sowie zusätzlich die Ionenaustauschfähigkeit verbessert.

Das Pflanzenwachstum kann ferner auch noch durch Zugabe von Substanzen verbessert werden, welche die Wasseraufnahmefähigkeit der Pflanzenfasern oder die Wiederbenetzbarkeit der Pflanzenfasern nach einem Austrocknen verbessern. Derartige Substanzen sind beispielsweise Tone, Tenside, vernetzte Polyacrylamide und ähnliche Substanzen.

Die erfindungsgemäße Aufgabe wird ferner durch ein Verfahren zur Herstellung eines Basismaterials für ein Pflanzenkultursubstrat gelöst, welches sich dadurch auszeichnet, daß durch mechanische Auffaserung von Pflanzenmaterial unvertorfte Pflanzenfasern hergestellt werden und daß diese Pflanzenfasern auf ihrer Oberfläche mit pflanzenwachstumsverbessernden Substanzen versehen werden.

Ein besonders vorteilhaftes Ausführungsbeispiel des erfindungsgemäßen Verfahrens sieht dabei vor, daß unvertorftes Pflanzenmaterial durch die Einwirkung von Scherkräften bei einer Temperatur von mehr als 60° C mechanisch zu Pflanzenfasern aufgefasert wird.

Besonders zweckmäßig ist es, wenn dieses Pflanzenmaterial in einer Extrudermaschine zu Pflanzenfasern mechanisch aufgefasert werden.

Darüber hinaus ist es beim erfindungsgemäßen Verfahren von Vorteil, wenn das Versehen der Oberfläche der Pflanzenfasern mit pflanzenwachstumsverbessernden Substanzen während der mechanischen Auffaserung des Pflanzenmaterials erfolgt, da die bei der mechanischen Auffaserung herrschenden Bedingungen für eine verbesserte Haftung der pflanzenwachstumsverbessernden Substanzen auf der Oberfläche der Pflanzenfasern sorgen.

Bei der Art der Zugabe der pflanzenwachstumsverbessernden Substanzen sind weitere Möglichkeiten denkbar.

Eine bevorzugte Möglichkeit sieht vor, daß dem Pflanzenmaterial vor der mechanischen Auffaserung zu den Pflanzenfasern die pflanzenwachstumsverbessernden Substanzen zugegeben werden.

Eine Alternative sieht vor, daß die pflanzenwachstumsverbessernden Substanzen den durch mechanische Auffaserung hergestellten Pflanzenfasern zugegeben und auf deren Oberfläche aufgebracht werden, das heißt, daß das Aufbringen auf der Oberfläche nach dem mechanischen Auffasern erfolgt.

Ferner sind hinsichtlich der Art und Weise der Zugabe der pflanzenwachstumsverbessernden Substanzen mehrere Möglichkeiten denkbar.

Eine vorteilhafte Möglichkeit ist die, die pflanzenwachstumsverbessernden Substanzen in flüssiger Form zuzugeben.

Eine alternative oder ergänzende Möglichkeit ist die, die pflanzenwachstumsverbessernden Substanzen in fester Form zuzugeben.

Ferner ist es insbesondere bei der Zugabe in fester Form denkbar, die pflanzenwachstumsverbessernden Substanzen durch Bepudern der Oberfläche der Pflanzenfasern auf diese aufzubringen.

Ganz generell ist es im Rahmen der vorliegenden Erfindung von Vorteil, wenn die pflanzenwachstumsverbessernden Substanzen auf der Oberfläche der Pflanzenfasern möglichst fest fixiert werden. Dies erfolgt vorzugsweise durch mechanische Einwirkung.

Besonders vorteilhaft ist es, das Auffasern des Pflanzenmaterials mit der mechanischen Einwirkung zur Fixierung der pflanzenwachstumsverbessernden Substanzen zu kombinieren, was insbesondere dadurch erfolgt, daß die pflanzenwachstumsverbessernden Substanzen durch mechanische Einwirkung während der mechanischen Auffaserung des Pflanzenmaterials auf der Oberfläche der Fasern fixiert werden.

Hinsichtlich der auf der Oberfläche der Pflanzenfasern aufzubringenden pflanzenwachstumsverbessernden Substanzen ist eine Vielzahl von Varianten und Kombinationen dieser Varianten denkbar.

Eine vorteilhafte Möglichkeit sieht vor, daß die pflanzenwachstumsverbessernden Substanzen basisch wirkende und einen pflanzengerechten pH-Wert der Pflanzenfasern einstellende pflanzenverträgliche Substanzen umfassen. Einzelne derartige Substanzen sind im Zusammenhang mit dem erfindungsgemäßen Basismaterial bereits erwähnt.

Alternativ oder ergänzend ist es denkbar, daß die pflanzenwachstumsverbessernden Substanzen die Pflanzenfasern gegen starken mikrobiellen Abbau schützende Substanzen sind.

Einzelne Beispiele derartiger Substanzen sind bereits im Zusammenhang mit dem erfindungsgemäßen Basismaterial genannt.

Darüber hinaus ist es alternativ oder ergänzend zu den vorstehend genannten Substanzen von Vorteil, wenn die pflanzenwachstumsverbessernden Substanzen die Ionenaustauschkapazität der Pflanzenfasern erhöhende Stoffe umfassen, wobei einzelne Beispiele derartiger Stoffe bereits im Zusammenhang mit dem erfindungsgemäßen Basismaterial genannt sind.

Schließlich ist es auch alternativ oder ergänzend zu den vorstehend genannten pflanzenwachstumsverbessernden Substanzen von Vorteil, wenn diese Pflanzennährstoffträger umfassen. Auch derartige Pflanzennährstoffträger wurden im Zusammenhang mit dem erfindungsgemäßen Basismaterial detailliert beschrieben.

Schließlich ist es zusätzlich von Vorteil, wenn alternativ oder ergänzend zu den vorstehend genannten pflanzenwachstumsverbessernden Substanzen diese auch noch pflanzenwachstumsstimulierende Substanzen umfassen, wobei ebenfalls vorstehend im Zusammenhang mit dem Basismaterial Ausführungsbeispiele derartiger Substanzen genannt sind.

Ein weiteres Ausführungsbeispiel des erfindungsgemäßen Verfahrens sieht vor, daß als pflanzenwachstumsverbessernde Substanzen die Wasseraufnahmefähigkeit der Pflanzenfasern verbessernde Substanzen zugegeben werden. Besonders bevorzugt ist es zusätzlich, wenn auch die Wiederbenetzbarkeit der Fasern verbessernde Substanzen zugegeben werden. Beispiele derartiger Substanzen sind ebenfalls im Zusammenhang mit dem erfindungsgemäßen Basismaterial genannt.

Ein besonders vorteilhaftes Ausführungsbeispiel eines erfindungsgemäßen Basismaterials umfaßt erfindungsgemäße, durch mechanisches Zerkleinern hergestellte unvertorfte Pflanzenfasern, welche auf ihrer Faseroberfläche mit Leonardit-Schiefer-Mehl, welches 75% Huminsäure enthält, Ureaform, kohlensaurem Kalk und Spurenelementdünger sowie zusätzlich noch mit NPK-Volldünger versehen sind. Dabei werden insbesondere Fichtenholzhackschnitzel verwendet, denen kohlensaurer Kalk, Ureaform und Leonardit-Schiefer-Mehl sowie der Spurenelementdünger vor dem Zerfasern zugegeben wird und nach dem Zerfasern wird diesen mit derartigen pflanzenwachstumsverbessernden Substanzen versehenen Pflanzenfasern noch der NPK-Volldünger zugemischt.

Das erfindungsgemäße Basismaterial wird einerseits als Bodenverbesserer eingesetzt und andererseits allein oder auch unter Zumischung weiterer Materialien als Kultursubstrat für Pflanzen verwendet.

Neben einem Basismaterial betrifft die Erfindung ferner ein Kultursubstrat für Pflanzen. Ein derartiges erfindungsgemäßes Kultursubstrat für Pflanzen soll ebenfalls dieselben umwelttechnischen Vorteile aufweisen wie das erfindungsgemäße Basismaterial, insbesondere soll zumindest teilweise Torf als Ausgangssubstanz eines derartigen Kultursubstrats ersetzbar sein.

Diese Aufgabe wird durch ein Kultursubstrat für Pflanzen gelöst, welches einen Anteil von mehr als 10 Vol.% von Basismaterial aufweist, welches eines oder mehrere der vorstehend genannten Merkmale aufweist.

Noch vorteilhafter ist es, wenn der Anteil des Basismaterials mit den vorstehend beschriebenen Merkmalen mehr als 30 Vol.% beträgt.

Noch vorteilhafter ist es, wenn der Anteil des vorstehend beschriebenen Basismaterials mehr als 50 Vol.% beträgt.

Darüber hinaus ist vorgesehen, daß das Kultursubstrat noch zusätzlich Zuschlagstoffe umfaßt.

Derartige Zuschlagstoffe sind beispielsweise substratbelüftende Zuschlagstoffe, das heißt solche Zuschlagstoffe, die für eine besonders gute Belüftung des Substrats und somit des Wurzelwerks von in diesem Substrat wachsenden Pflanzen Sorge tragen.

Beispiele derartiger substratbelüftender Materialien sind Torf, Rinde, Perlite, Sand, Bimskies, gebrannte und geschäumte Tonmaterialien und Granulate aus geschäumten Kunststoffen.

Derartige substratbelüftende Stoffe können dem Kultursubstrat mit Anteilen von 0 bis 90 Vol.% zugegeben sein.

Ferner ist es vorteilhaft, wenn als Zuschlagstoffe substratvolumenstabilisierende Stoffe zugegeben sind. Derartige substratvolumenstabilisierende Stoffe sind Sand, Bimskies, gebrannte und geschäumte Tonmaterialien sowie Granulate aus geschäumten Kunststoffen, da diese dem mikrobiellen Abbau nicht unterworfen sind und somit ihr Volumen lange Zeit beibehalten. Derartige substratvolumenstabilisierende Stoffe können dem Kultursubstrat mit Anteilen von 0 bis 90 Vol.% zugegeben sein.

Schließlich ist es ebenfalls von Vorteil, wenn die Zuschlagstoffe wasserspeichernde Zuschlagstoffe sind. Diese Zuschlagstoffe sind dazu da, zusätzlich noch neben dem Basismaterial Wasser zu speichern. Derartige wasserspeichernde Zuschlagstoffe sind beispielsweise Torf, naturbelassene Tone, Bimskies sowie gebrannte und geschäumte offenporige Tonmaterialien, wie beispielsweise gebrochener Blähton, Ziegelsplitt und ähnliche Produkte. Derartige wasserspeichernde Stoffe können dem Kultursubstrat mit Anteilen von 0 bis 90 Vol.% zugegeben sein.

Schließlich ist es von Vorteil, wenn die Zuschlagstoffe Ionenaustauscheigenschaften aufweisende Zuschlagstoffe sind. Derartige Ionenaustauscheigenschaften aufweisende Zuschlagstoffe sind beispielsweise Tone mit unterschiedlichen Montmorillonitgehalten in Pulver oder Granulatform sowie zeolithhaltige Gesteinswerke und Vermiculite.

Vorzugsweise sind derartige Zuschlagstoffe mit einem Anteil von 7 bis 200 kg/m$^3$ dem Kultursubstrat beigemischt.

Ferner ist es von Vorteil, wenn dem Kultursubstrat Pflanzennährstoffträger zugegeben sind, wobei diese Pflanzennährstoffträger alternativ oder ergänzend zu auf der Oberfläche des Basismaterials aufgebrachten Pflanzennährstoffträgern vorgesehen sein können.

Beispielsweise ist es denkbar, die Oberfläche des Basismaterials mit einem notwendigen Grundgehalt an Pflanzennährstoffen zu versehen, dann aber dem Kultursubstrat, welches für spezielle Pflanzen geeignet sein soll, noch die speziellen Pflanzennährstoffträger zuzugeben.

Derartige Pflanzennährstoffträger können in vielfacher Art beigegeben sein.

Vorzugsweise kann es sich bei den Pflanzennährstoffträgern sowohl um organische und/oder anorganische Pflanzennährstoffträger handeln.

Anorganische Pflanzennährstoffträger sind beispielsweise Ammoniumsalze, Nitrate, Phosphate, Kalisalze, mineralische Volldünger, kunststoffumhüllte Einzel- oder Mehrnährstoffdünger mit Langzeitwirkung.

Als organische Pflanzennährstoffträger sind beispielsweise natürliche Stickstoffverbindungen, wie Guano, Hornmehl, Gülle, Mist oder synthetische Stickstoffverbindungen, wie Harnstoff, Harnstoff-Formaldehydkondensate, Dicyandiamid, Crotonylidendiurea usw einsetzbar.

Derartige Pflanzennährstoffträger sind vorzugsweise mit einem Anteil von 0,5 bis 3 kg/m$^3$ diesem zugegeben.

Schließlich ist vorteilhafterweise dem Kultursubstrat noch Kalk zugegeben, wobei der Kalk einen Anteil von 2 bis 6 kg/m$^3$ am Kultursubstrat hat, und mit dem Kalk ein pH-Wert des Kultursubstrats von ungefähr 4 bis ungefähr 6 einstellbar ist.

Darüber hinaus ist zweckmäßigerweise noch die Zugabe eines Spurennährstoffträgers als Pflanzennährstoffträger vorgesehen, wobei ein derartiger Spurennährstoffträger Eisen, Kupfer, Zink, Mangan, Molybdän als Salze, Chelate oder Metallmehl umfassen kann. Vorzugsweise beträgt der Anteil des Spurennährstoffträgers am Kultursubstrat 0,01 bis 0,2 kg/m$^3$.

Schließlich wird die erfindungsgemäße Aufgabe auch noch durch ein Kultursubstrat für Pflanzen gelöst, welches durch einen Anteil von mechanisch zerfaserten unvertorften Pflanzenfasern von mehr als 10 Vol.% gekennzeichnet ist.

Vorteilhafterweise beträgt der Anteil der mechanisch zerfaserten unvertorften Pflanzenfasern mehr als 30 Vol.% und noch besser ist es, wenn der Anteil der mechanisch zerfaserten unvertorften Pflanzenfasern mehr als 50 Vol.% beträgt.

Ferner ist es von Vorteil, wenn dieses Kultursubstrat pflanzenwachstumsverbessernde Substanzen umfaßt. Beispiele derartiger pflanzenwachstumsverbessernder Substanzen wurden eingangs im Zusammenhang mit dem erfindungsgemäßen Basismaterial genannt.

Darüber hinaus ist es von Vorteil, wenn das Kultursubstrat die physikalischen Eigenschaften desselben verbessernde Zuschlagstoffe umfaßt, wobei Beispiele und Mengenanteile derartiger Zuschlagstoffe im Zusammenhang mit dem vorstehend beschriebenen Kultursubstrat erläutert sind.

Schließlich ist es ebenfalls von Vorteil, wenn dieses Kultursubstrat Pflanzennährstoffträger umfaßt, die im einzelnen ebenfalls im Zusammenhang mit dem Kultursubstrat beschrieben sind und schließlich ist es von Vorteil, wenn dieses Kultursubstrat noch Kalk umfaßt, wobei der Anteil des Kalks vergleichbar mit dem vorstehend genannten ist.

Es ist bekannt, als Substrate für erdlose Kulturverfahren beispielsweise Steinwolle, Blähton, PU-Schaum und ähnliche Materialien zu verwenden, wie beispielsweise in der Zeitschrift "Deutscher Gartenbau" 20/1990, Seiten 1354 bis 1355 oder 38/1990, Seiten 2467 bis 2469 oder 48/1990, Seiten 3067 bis 3071 beschrieben.

Diese Materialien haben den Nachteil, daß sie nach ihrer Verwendung nicht umweltfreundlich entsorgbar sind.

Der Erfindung liegt daher ferner die Aufgabe zugrunde, ein Substratmaterial für Hydrokulturen zur Verfügung zu stellen, welches einerseits die Möglichkeit schafft, diese Hydrokulturen in gleicher Weise zu betreiben wie mit den bislang bekannten Substraten, andererseits aber umweltfreundlich und vorteilhaft entsorgbar ist.

Diese Aufgabe wird durch ein Substrat für erdlose Hydrokulturen gelöst, welches ein Basismaterial mit einem oder mehreren der vorstehend beschriebenen Merkmale umfaßt.

Darüber hinaus wird diese Aufgabe aber auch durch ein Substrat gelöst, welches ein Kultursubstrat mit einem oder mehreren der vorstehend beschriebenen Merkmale umfaßt.

Besonders vorteilhaft ist ein derartiges Substrat dann, wenn dieses mit wasserunlöslichen pflanzenwachstumsverbessernden Substanzen versehene Pflanzenfasern aufweist. Derart behandelte Pflanzenfasern haben den großen Vorteil, daß sich die pflanzenwachstumsverbessernden Substanzen nicht in der Nährlösung für die Hydrokultur auflösen und mit dieser ausgeschwemmt werden, sondern in dem Substrat verbleiben.

Besonders zweckmäßig ist es, wenn das Basismaterial oder das Kultursubstrat auf konventionelle Nährlösungen für Hydrokulturen im wesentlichen substanzaustauschneutral reagiert, das heißt an diese Nährlösung keine Substanzen abgibt und auch aus diesen Nährlösungen keine Substanzen aufnimmt, so daß das Basismaterial - obwohl es sich um ein anorganisches Material handelt auf die Nährlösung im wesentlichen wie ein inertes Material reagiert.

Besonders zweckmäßig ist es dabei, wenn das Basismaterial auf konventionelle Nährlösung für Hydrokulturen im wesentlichen stickstoffaufnahmeneutral reagiert, und somit den Stickstoffgehalt der konventionellen Nährlösung nicht verändert.

Als konventionelle Nährlösung kommt insbesondere eine Nährlösung in Betracht, wie sie bei den aus dem Stand der Technik bekannten Hydrokulturverfahren mit Steinwolle als Substrat, sogenannten Steinwollkulturen, bekannt sind.

Ein weiteres vorteilhaftes Ausführungsbeispiel eines derartigen Substrats sieht vor, daß die Hydrokultur eine Sackkultur mit automatischer Tropfbewässerung ist, wobei insbesondere die automatische Tropfbewässerung im geschlossenen System erfolgt. Insbesondere bei derartigen Hydrokulturen ist es von Bedeutung, daß das Basismaterial oder das Kultursubstrat auf konventionelle Nährlösung im wesentlichen substanzaustauschneutral reagiert.

Ferner sieht ein besonders bevorzugtes Ausführungsbeispiel eines erfindungsgemäßen Substrats vor, daß dieses in einer Folienverpackung blockförmig abgepackt ist, insbesondere ist die Folienverpackung dabei als geschlossener Foliensack ausgebildet, so daß das erfindungsgemäße Substrat einfach handhabbar ist.

Ferner betrifft die Erfindung ein Substrat, welches ausschließlich Basismaterial oder Kultursubstrat mit einem oder mehreren der vorstehend beschriebenen Merkmale umfaßt.

Schließlich besteht die Erfindung auch noch in der Verwendung eines Basismaterials oder eines Kultursubstrats mit den vorstehend beschriebenen Merkmalen als Substrat für erdlose Hydrokulturen, insbesondere mit einem oder mehreren der vorstehend beschriebenen Merkmale von Hydrokulturen.

Ein besonders vorteilhaftes erfindungsgemäßes Substrat umfaßt erfindungsgemäß aufgefaserte Pflanzenfasern, versehen mit Leonardit-Schiefer-Mehl als Huminsäureträger, Ureaform als Stickstoffträger, kohlensaurem Kalk zur Pufferung und Spurenelementdünger, wobei sowohl das Leonardit-Schiefer-Mehl, Ureaform und kohlensaurer Kalk nicht wasserlöslich oder schwer wasserlöslich sind.

Weitere Merkmale und Vorteile der Erfindung ergeben sich aus den nachstehend genannten Ausführungsbeispielen bevorzugter Kultursubstrate.

Vorzugsweise erfolgt die Herstellung des erfindungsgemäß verwendeten Fasermaterials durch die Zerfaserung von Rückständen aus holzverarbeitenden, landwirtschaftlichen Betrieben und Forstbetrieben, wie Baumrinde, Schwachholz, Äste, Holzhackschnitzel, Stroh, Pflanzenstengel und ähnlichem.

Derartige Rückstände werden in eine Doppelschneckenaufbereitungsanlage DSA 100 der Firma UWAS Umwelttechnik GmbH, Mayerbacherstraße 69, D-8045 Ismaning oder eine ähnliche, Pflanzenmaterial durch Zerreiben oder Zerquetschen, vorzugsweise bei hoher Temperatur und hohem Druck, auffasernde Aufbereitungsanlage beispielsweise mit Doppelschnecken eingegeben und mit dieser zu dem erfindungsgemäß verwendeten Fasermaterial verarbeitet.

Ausgehend von einer derartigen Herstellung des Fasermaterials sind folgende vorteilhaften Beispiele eines erfindungsgemäßen Basismaterials herstellbar:

Beispiel 1.1
Fichtenholzhackschnitzel und Leonardit-Schiefer-Mehl werden der Doppelschneckenaufbereitungsanlage DSA 100 zugegeben, wobei die Dosierung so erfolgt, daß $1 m^3$ Fichtenholzhackschnitzel 1,5 kg huminsäurehaltiges Leonardit-Schiefer-Mehl zugegeben werden.

Diese Mischung wird in der Doppelschneckenaufbereitungsanlage DSA 100 mechanisch zerfasert und gleichzeitig wird das Leonardit-Schiefer-Mehl auf die Pflanzenfasern aufgebracht.

Beispiel 1.2

Fichtenholzhackschnitzel und Braunkohlenstaub werden über separate Dosiervorrichtungen der Doppelschneckenaufbereitungsanlage DSA 100 zugegeben, wobei die Dosierung so erfolgt, daß 1 m³ Fichtenholzhackschnitzel 3 kg Braunkohlenstaub zugegeben werden. Diese Mischung wird in der Doppelschneckenaufbereitungsanlage DSA 100 mechanisch zerfasert und gleichzeitig wird der Braunkohlenstaub auf die Fasern aufgebracht.

Beispiel 1.3

Über separate Dosiervorrichtungen werden Fichtenholzhackschnitzel, Braunkohlenstaub und Tonmehl der Doppelschneckenaufbereitungsanlage DSA 100 zugegeben, wobei die Mischungsverhältnisse so gewählt werden, daß zu 1 m³ Fichtenholzhackschnitzel 3 kg Braunkohlenstaub und 2 kg Tonmehl hinzugegeben werden, wobei das Tonmehl vorzugsweise einen Montmorillonitgehalt von ungefähr 70 % aufweist.

Beispiel 1.4

Der Doppelschneckenaufbereitungsanlage DSA 100 werden Fichtenholzhackschnitzel, Braunkohlenstaub und Huminsäurepulver über separate Dosiervorrichtungen zugegeben, wobei die Mischungsverhältnisse 1 m³ Fichtenholzhackschnitzel auf 3 kg Kohlenstaub und 2 kg Huminsäurepulver betragen.

Beispiel 1.5

Der Doppelschneckenaufbereitungsanlage werden Fichtenholzhackschnitzel, kohlensaurer Kalk, Braunkohlenstaub, Tonmehl mit ungefähr 70 % Montmorillonitgehalt und Huminsäurepulver über separate Dosiervorrichtungen zugegeben, wobei die Mischungsverhältnisse 1 m³ Fichtenholzhackschnitzel auf 3,5 kg kohlensauren Kalk, 3 kg Braunkohlenstaub, 2 kg Tonmehl und 2 kg Huminsäurepulver betragen.

Beispiel 1.6

Der Doppelschneckenaufbereitungsanlage DSA 100 werden Fichtenholzhackschnitzel, kohlensaurer Kalk, Braunkohlenstaub, Tonmehl mit ungefähr 70 % Montmorillonitgehalt und Dünger über separate Dosiervorrichtungen zugegeben, wobei die Mischungsverhältnisse 1 m³ Fichtenholzhackschnitzel, 3,5 kg kohlensaurer Kalk, 3 kg Braunkohlenstaub, 2 kg Tonmehl und 1,5 kg Ureaform als Düngemittel betragen.

Beispiel 1.7

Der Doppelschneckenaufbereitungsanlage DSA 100 werden Fichtenholzhackschnitzel, Braunkohlenstaub und hochdisperse Kieselsäure über separate Dosiervorrichtungen zugegeben, wobei die Mischungsverhältnisse 1 m³ Fichtenholzhackschnitzel, 3 kg Braunkohlenstaub und 1 kg hochdisperse Kieselsäure betragen.

Beispiel 1.8

Der Doppelschneckenaufbereitungsanlage DSA 100 werden Fichtenholzhackschnitzel, Braunkohlenstaub und Wasserglas über separate Dosiervorrichtungen zugegeben, wobei die Mischungsverhältnisse 1 m³ Fichtenholzhackschnitzel, 3 kg Braunkohlenstaub und 0,5 kg Wasserglas betragen.

Beispiel 1.9

Der Doppelschneckenaufbereitungsanlage DSA 100 werden Fichtenholzhackschnitzel eingegeben. In den Zerfaserungsblock der Doppelschneckenmaschine werden über separate Dosiervorrichtungen zuerst 0,5 kg Wasserglas und anschließend 1 kg vorzugsweise 75 %ige Phosphorsäure zugegeben, um damit einen pH-Wert der erzeugten Pflanzenfasern von ungefähr 4 bis ungefähr 6 einzustellen.

Beispiel 1.10

Bei allen Beispielen 1.1 bis 1.9 werden die Fichtenholzhackschnitzel vor ihrer Eingabe in die Doppelschneckenaufbereitungsanlage DSA 100 vorbehandelt, und zwar mit einer NPK-Düngerlösung 8-8-6, wobei auf 1 m³ Fichtenholzhackschnitzel 2,4 l derartiger Düngerlösung aufgesprüht werden. Diese NPK-Düngerlösung hat folgende Zusammensetzung:

8 % Gesamtstickstoff, 8 % wasserlösliches Phosphat, 6 % wasserlösliches Kaliumoxid.

Beispiel 1.11

Die Pflanzenfasern, hergestellt gemäß Beispiel 1.1 bis 1.8 werden mit Wasserglas und Phosphorsäure besprüht und anschließend entsprechend dem gewünschten Feuchtigkeitsgehalt des Basismaterials getrocknet. Dabei werden auf 1 m³ Pflanzenfasern zunächst 0,5 kg Wasserglas aufgesprüht und anschließend 1 kg etwa 75%ige Phosphorsäure, so daß ein pH-Wert der Pflanzenfasern zwischen ungefähr 4 und ungefähr 6 entsteht.

Beispiel 1.12

Die gemäß den Beispielen 1.1 bis 1.9 hergestellten Pflanzenfasern werden mit einer NPK-Düngerlösung 8-8-6 besprüht und anschließend auf den gewünschten Feuchtigkeitsgehalt getrocknet. Dabei wird 1 m³ Pflanzenfasern mit 2,4 l NPK-Düngerlösung 8-8-6 besprüht, wobei diese Düngerlösung 8 % Gesamtstickstoff, 8 % wasserlösliches Phosphat und 6 % wasserlösliches Kaliumoxid aufweist.

Beispiel 1.13

Pflanzenfasern, hergestellt gemäß den Beispielen 1.2, 1.3 und 1.6 bis 1.9, werden mit Harnstofflösung und Huminsäureextrakt besprüht und anschließend bis zum gewünschten Feuchtigkeitsgehalt getrocknet, wobei auf 1 m$^3$ Pflanzenfaser ungefähr 1 l ungefähr 50%ige Harnstofflösung und 1 l Huminsäureextrakt mit 12 % Huminsäureanteil aufgesprüht werden.

Beispiel 1.14

Der Doppelschneckenaufbereitungsanlage DSA 100 werden 1 m$^3$ Fichtenholzhackschnitzel, 1,5 kg huminsäurehaltiges Leonardit-Schiefer-Mehl, 1,5 kg Ureaform, 2,25 kg kohlensaurer Kalk und 0,15 kg Spurenelementdünger zugegeben. 1 m$^3$ derartiger, mit pflanzenwachstumsverbessernden Substanzen versehener aus der Doppelschneckenaufbereitungsanlage DSA 100 kommender Pflanzenfasern werden ferner 2 kg NPK-Volldünger 12-12-17-2 zugegeben und untergemischt.

Die vorstehend erläuterten Beispiele von Basismaterialien können selbständig als Kultursubstrat für Pflanzen Verwendung finden. Darüber hinaus ist ausgehend von dem Basismaterial gemäß den Beispielen 1.1 bis 1.14 ein Kultursubstrat für Pflanzen herstellbar, welches die in den nachfolgenden Beispielen angegebenen Bestandteile aufweist:

Beispiel 2.1

Zu dem erfindungsgemäßen Basismaterial gemäß den Beispielen 1.1 bis 1.14 werden kohlensaurer Kalk, mineralischer NPK-Volldünger 12-12-17-2 und 100 g Spurenelementdünger, z.B. Radigen, zugegeben, wobei auf 1 m$^3$ des erfindungsgemäßen Basismaterials 2 kg kohlensaurer Kalk, 2 kg mineralischer NPK-Volldünger und 100 g Spurenelementdünger entfallen.

Beispiel 2.2

Das Kultursubstrat gemäß Beispiel 2.1 umfaßt zusätzlich noch Stickstofflangzeitdünger, beispielsweise ein synthetisches Harnstoff-Formaldehyd-Kondensat, wie Ureaform, mit einem Anteil von einem kg auf 1m$^3$ des erfindungsgemäßen Basismaterials.

Beispiel 2.3

Das Kultursubstrat für Pflanzen umfaßt das erfindungsgemäße Basismaterial, zusätzlich kohlensauren Kalk, mineralischen NPK-Volldünger 12-12-17-2, Tonmehl mit zirka 70 % Montmorillonitgehalt und Spurenelementdünger, wobei auf 1m$^3$ des erfindungsgemäßen Basismaterials 2 kg kohlensaurer Kalk, 2 kg NPK-Volldünger, 15 kg Tonmehl und 100 g Spurenelementdünger, z.B. Radigen, kommen.

Beispiel 2.4

Das erfindungsgemäße Basismaterial wird mit Hochmoortorf vermischt und dieser Mischung werden kohlensaurer Kalk, mineralischer NPK-Volldünger 12-12-17-2 und Spurenelementdünger zugegeben, wobei auf 500 l Basismaterial 500 l Hochmoortorf, 4 kg kohlensaurer Kalk, 2 kg mineralischer NPK-Volldünger und 100 g Spurenelementdünger entfallen.

Beispiel 2.5

Das Kultursubstrat gemäß Beispiel 2.4 umfaßt zusätzlich noch Stickstofflangzeitdünger, wobei auf 500 l Basismaterial 1 kg Stickstofflangzeitdünger entfallen.

Beispiel 2.6

Das erfindungsgemäße Basismaterial wird mit Hochmoortorf vermischt und dieser Mischung werden kohlensaurer Kalk, mineralischer NPK-Volldünger 12-12-17-2, Ureaform und Tongranulat mit 20% Montmorillonitgehalt zugegeben, wobei auf 500 l Basismaterial 500 l Hochmoortorf, 4 kg kohlensaurer Kalk, 2 kg mineralischer NPK-Volldünger, 1,5 kg Ureaform und 40 kg Tongranulat entfallen.

Weitere Ausführungsbeispiele eines erfindungsgemäßen Kultursubstrats verwenden die eingangs beschriebenen und mit der Doppelschneckenaufbereitungsanlage DSA 100 hergestellten Pflanzenfasern, insbesondere Pflanzenfasern aus Forstrückständen.

Die Zusammensetzung derartiger Kultursubstrate für Pflanzen ergibt sich aus den folgenden Ausführungsbeispielen:

Beispiel 3.1

Die Pflanzenfaser wird mit kohlensaurem Kalk, mineralischem NPK-Volldünger 12-12-17-2 und Tormehl sowie Spurenelementdünger vermischt, wobei auf 1 m$^3$ Pflanzenfaser 2 kg kohlensaurer Kalk, 2 kg mineralischer NPK-Volldünger, 15 kg Tonmehl mit ungefähr 70 % Montmorillonitgehalt und 100 g Spurenelementdünger kommen.

Beispiel 3.2

Mit der Doppelschneckenaufbereitungsanlage DSA 100 hergestellte Pflanzenfaser wird mit Hochmoortorf gemischt und zu dieser Mischung werden kohlensaurer Kalk, mineralischer NPK-Volldünger 12-12-17-2 und Spurenelementdünger, z.B. Radigen, zugegeben, wobei auf 300 l Pflanzenfaser 700 l Hochmoortorf, 4 kg kohlensaurer Kalk, 2 kg mineralischer NPK-Volldünger und 100g Spurenelementdünger kommen.

Beispiel 3.3

Mit der Doppelschneckenaufbereitungsanlage DSA 100 hergestellte Pflanzenfasern werden mit kompostierter Nadelholzrinde und Hochmoortorf vermischt und zu dieser Mischung werden kohlensaurer Kalk, mineralischer NPK-Volldünger 12-12-17-2 und Spurenelementdünger zugegeben, wobei auf 333 l Pflanzenfasern 333 l kompostierte Nadelholzrinde und 333 l Hochmoortorf kommen und zu der Mischung dieser 3 Bestandteile 4 kg kohlensaurer Kalk, 2 kg NPK-Volldünger und 100 g Spurenelementdünger zugegeben werden.

Beispiel 3.4

Ein erfindungsgemäßes Kultursubstrat enthält die Anteile des Kultursubstrats gemäß Beispiel 3.3 und zusätzlich noch Stickstofflangzeitdünger, z.B. synthetische Harnstoff-Formaldehydkondensate, wie Ureaform, wobei der Mischung aus 333 l Pflanzenfaser, 333 l kompostierter Nadelholzrinde und 333 l Hochmoortorf 1 kg Stickstofflangzeitdünger zusätzlich zugegeben werden.

Beispiel 3.5

Ein erfindungsgemäßes Kultursubstrat enthält neben den Anteilen des Beispiels 3.4 noch zusätzlich Tongranulat mit zirka 20 % Montmorillonitgehalt, wobei der Mischung aus 333 l Pflanzenfaser, 333 l kompostierter Nadelholzrinde und 333 l Hochmoortorf noch zusätzlich 120 kg Tongranulat zugegeben werden.

Alle vorstehend beschriebenen Beispiele der erfindungsgemäßen Kultursubstrate sind so hergestellt, daß sie einen pH-Wert zwischen ungefähr 4 und ungefähr 6 aufweisen.

Vorzugsweise finden die erfindungsgemäßen Kultursubstrate ihren Einsatz im Zierpflanzenbereich und sind daher auch hinsichtlich der pflanzenwachstumsverbessernden Stoffe auf Zierpflanzen abgestimmt.

Das erfindungsgemäße Basismaterial oder erfindungsgemäße Kultursubstrate lassen sich aber auch in professionellen, insbesondere Nutzpflanzenbereichen einsetzen.

Eine besonders bevorzugte Einsatzmöglichkeit der erfindungsgemäßen Basismaterialien oder Kultursubstrate ist insbesondere bei erdlosen Kulturverfahren, insbesondere erdlosen Hydrokulturen möglich. Beispielsweise lassen sich Sackkulturen im geschlossenen System mit automatischer Tropfbewässerung unter Verwendung eines erfindungsgemäßen Basismaterials oder Kultursubstrats als Substrat durchführen.

Beispielsweise hat ein derartiges Substrat folgende Zusammensetzung:

Beispiel 4.1

Fichtenholzhackschnitzel werden der Doppelschneckenaufbereitungsanlage DSA 100 zusammen mit kohlensaurem Kalk, Ureaform, Spurenelementdünger und huminsäurehaltigem Leonardit-Schiefer-Mehl zugegeben, wobei als vorteilhaftes Mischungsverhältnis zu einem 1 m$^3$ Fichtenholzhackschnitzel 1,5 kg huminsäurehaltiges Leonardit-Schiefer-Mehl, 1,5 kg Ureaform und 2,25 kg kohlensaurer Kalk sowie 0,15 kg Spurenelementdünger zugegeben werden. Der pH-Wert wird hierbei im Bereich zwischen ungefähr 4 und ungefähr 6 eingestellt.

Dieses Substrat wird in Form von quaderförmigen Preßlingen in Polyäthylenfolie allseitig umschlossen verpackt, wobei beispielsweise die Preßlinge Abmessungen von 90 x 15 x 8 cm aufweisen.

**Patentansprüche**

1.  Basismaterial für ein Pflanzenkultursubstrat, dadurch gekennzeichnet, daß dieses durch mechanisches Zerkleinern hergestellte unvertorfte Pflanzenfasern umfaßt, welche auf ihrer Faseroberfläche mit einer pflanzenwachstumsverbessernden Substanz versehen sind.

2.  Basismaterial nach Anspruch 1, dadurch gekennzeichnet, daß die mechanisch aufgefaserten Pflanzenfasern maschinell durch Einwirkung von Scherkräften bei einer Temperatur von mehr als 60° C hergestellt sind.

3.  Basismaterial nach Anspruch 2, dadurch gekennzeichnet, daß die maschinell aufgefaserten Pflanzenfasern durch Auffasern von Pflanzenmaterial in einer Extrudervorrichtung hergestellt sind.

4.  Basismaterial nach einem der voranstehenden Ansprüche, dadurch gekennzeichnet, daß die pflanzenwachstumsverbessernde Substanz im Verlauf des mechanischen Auffaserns des Pflanzenmaterials auf die Oberfläche der Pflanzenfasern aufgebracht ist.

5.  Basismaterial nach einem der voranstehenden Ansprüche, dadurch gekennzeichnet, daß die pflanzenwachstumsverbessernde Substanz eine basisch wirkende und einen pflanzengerechten pH-Wert der Pflanzenfasern einstellende pflanzenverträgliche Substanz umfaßt.

6.  Basismaterial nach einem der voranstehenden Ansprüche, dadurch gekennzeichnet, daß die pflanzenwachstumsverbessernde Substanz eine die Pflanzenfasern gegen starken mikrobiellen Abbau schützende Substanz umfaßt.

7.  Basismaterial nach Anspruch 6, dadurch gekennzeichnet, daß die die Fasern gegen starken mikrobiellen Abbau schützende Substanz eine die Pflanzenfasern mit einem Überzug versehende Substanz ist.

8.  Basismaterial nach einem der voranstehenden Ansprüche, dadurch gekennzeichnet, daß die pflanzenwachstumsverbessernde Substanz einen die Ionenaustauschkapazität der Pflanzenfasern erhöhender Stoff umfaßt.

9.  Basismaterial nach einem der voranstehenden Ansprüche, dadurch gekennzeichnet, daß die pflanzenwachstumsverbessernde Substanz Pflanzennährstoffträger umfaßt.

**10.** Basismaterial nach Anspruch 9, dadurch gekennzeichnet, daß die Pflanzennährstoffträger organische Substanzen umfassen.

**11.** Basismaterial nach Anspruch 9, dadurch gekennzeichnet, daß die Pflanzennährstoffträger anorganische Stoffe umfassen.

**12.** Basismaterial nach einem der voranstehenden Ansprüche, dadurch gekennzeichnet, daß die pflanzenwachstumsverbessernde Substanz Spurennährstoffträger umfaßt.

**13.** Basismaterial nach einem der voranstehenden Ansprüche, dadurch gekennzeichnet, daß die pflanzenwachstumsverbessernde Substanz eine pflanzenwachstumsstimulierende Substanz umfaßt.

**14.** Basismaterial nach einem der voranstehenden Ansprüche, dadurch gekennzeichnet, daß die pflanzenwachstumsverbessernde Substanz eine die Wasseraufnahmefähigkeit der Pflanzenfasern verbessernde Substanz umfaßt.

**15.** Basismaterial nach einem der voranstehenden Ansprüche, dadurch gekennzeichnet, daß die pflanzenwachstumsverbessernde Substanz eine die Wiederbenetzbarkeit der Fasern nach einem Austrocknen verbessernde Substanz umfaßt.

**16.** Verfahren zur Herstellung eines Basismaterials für ein Pflanzenkultursubstrat, dadurch gekennzeichnet, daß durch mechanische Auffaserung von Pflanzenmaterial mit hohem Zellulose und Ligninanteil, insbesondere von verholztem Pflanzenmaterial, unvertorfte Pflanzenfasern hergestellt werden und daß diese Pflanzenfasern auf ihrer Oberfläche mit einer pflanzenwachstumsverbessernden Substanz versehen werden.

**17.** Verfahren nach Anspruch 16, dadurch gekennzeichnet, daß das Pflanzenmaterial durch Einwirkung von Scherkräften bei einer Temperatur von mehr als 60° C mechanisch zu unvertorften Pflanzenfasern aufgefasert wird.

**18.** Verfahren nach Anspruch 17, dadurch gekennzeichnet, daß das Pflanzenmaterial in einer Extrudermaschine zu Pflanzenfasern mechanisch aufgefasert wird.

**19.** Verfahren nach einem der Ansprüche 16 bis 18, dadurch gekennzeichnet, daß das Versehen der Oberfläche der Pflanzenfasern mit einer pflanzenwachstumsverbessernden Substanz während der mechanischen Auffaserung des Pflanzenmaterials erfolgt.

**20.** Verfahren nach einem der Ansprüche 16 bis 19, dadurch gekennzeichnet, daß dem Pflanzenmaterial vor der mechanischen Auffaserung zu den Pflanzenfasern die pflanzenwachstumsverbessernde Substanz zugegeben wird.

**21.** Verfahren nach einem der Ansprüche 16 bis 20, dadurch gekennzeichnet, daß die pflanzenwachstumsverbessernde Substanz den durch mechanische Auffaserung hergestellten Pflanzenfasern zugegeben und auf deren Oberfläche aufgebracht wird.

**22.** Verfahren nach einem der Ansprüche 16 bis 21, dadurch gekennzeichnet, daß die pflanzenwachstumsverbessernde Substanz in flüssiger Form zugegeben wird.

**23.** Verfahren nach einem der Ansprüche 16 bis 22, dadurch gekennzeichnet, daß die pflanzenwachstumsverbessernde Substanz in fester Form zugegeben wird.

**24.** Verfahren nach einem der Ansprüche 16 bis 23, dadurch gekennzeichnet, daß die pflanzenwachstumsverbessernde Substanz durch Bepudern der Pflanzenfasern auf deren Oberfläche aufgebracht wird.

**25.** Verfahren nach einem der Ansprüche 16 bis 24, dadurch gekennzeichnet, daß die pflanzenwachstumsverbessernden Substanzen auf der Oberfläche der Pflanzenfasern durch mechanische Einwirkung fixiert werden.

**26.** Verfahren nach Anspruch 25, dadurch gekennzeichnet, daß die pflanzenwachstumsverbessernde Substanz durch mechanische Einwirkung während der mechanischen Auffaserung des Pflanzenmaterials auf der Oberfläche der Fasern fixiert wird.

**27.** Verfahren nach einem der Ansprüche 16 bis 26, dadurch gekennzeichnet, daß als pflanzenwachstumsverbessernde Substanz eine basisch wirkende und einen pflanzengerechten pH-Wert der Pflanzenfasern einstellende pflanzenverträgliche Substanz zugegeben wird.

**28.** Verfahren nach einem der Ansprüche 16 bis 27, dadurch gekennzeichnet, daß als pflanzenwachstumsverbessernde Substanz eine die Pflanzenfasern gegen starken mikrobiellen Abbau schützende Substanz zugegeben wird.

**29.** Verfahren nach Anspruch 28, dadurch gekennzeichnet, daß die die Fasern gegen starken mikrobiellen Abbau schützende Substanz eine die Pflanzenfasern mit einem Überzug versehende Substanz ist.

**30.** Verfahren nach einem der Ansprüche 16 bis 29, dadurch gekennzeichnet, daß als pflanzenwachstumsverbessernde Substanz ein die Ionenaustauschkapazität der Pflanzenfasern erhöhender Stoff zugegeben wird.

**31.** Verfahren nach einem der Ansprüche 16 bis 30, dadurch gekennzeichnet, daß als pflanzenwachstumsverbessernde Substanz ein Pflanzennährstoffträger zugegeben wird.

**32.** Verfahren nach einem der Ansprüche 16 bis 31, dadurch gekennzeichnet, daß als pflanzenwachstumsverbessernde Substanz ein Spurennährstoffträger zugegeben wird.

**33.** Verfahren nach einem der Ansprüche 16 bis 32, dadurch gekennzeichnet, daß als pflanzenwachstumsverbessernde Substanz eine pflanzenwachstumsstimulierende Substanz zugegeben wird.

**34.** Verfahren nach einem der Ansprüche 16 bis 33, dadurch gekennzeichnet, daß als pflanzenwachstumsverbessernde Substanz eine die Wasseraufnahmefähigkeit der Pflanzenfasern verbessernde Substanz zugegeben wird.

**35.** Verfahren nach einem der Ansprüche 16 bis 34, dadurch gekennzeichnet, daß als pflanzenwachstumsverbessernde Substanz eine die Wiederbenetzbarkeit der Fasern nach einem Austrocknen verbessernde Substanz zugegeben wird.

**36.** Basismaterial für ein Pflanzenkultursubstrat, dadurch gekennzeichnet, daß dies nach einem der Ansprüche 16 bis 35 hergestellt ist.

**37.** Kultursubstrat für Pflanzen, dadurch gekennzeichnet, daß dieses einen Anteil von mehr als 10 Vol.% von Basismaterial nach einem der voranstehenden Ansprüche aufweist.

**38.** Kultursubstrat nach Anspruch 37, dadurch gekennzeichnet, daß der Anteil des Basismaterials mehr als 30 Vol.% beträgt.

**39.** Kultursubstrat nach einem der Ansprüche 37 oder 38, dadurch gekennzeichnet, daß der Anteil des Basismaterials mehr als 50 % beträgt.

**40.** Kultursubstrat nach einem der Ansprüche 37 bis 39, dadurch gekennzeichnet, daß dieses einen Zuschlagstoff umfaßt.

**41.** Kultursubstrat nach Anspruch 40, dadurch gekennzeichnet, daß der Zuschlagstoff ein substratbelüftender Stoff ist.

**42.** Kultursubstrat nach Anspruch 40 oder 41, dadurch gekennzeichnet, daß der Zuschlagstoff ein substratvolumenstabilisierender Stoff ist.

**43.** Kultursubstrat nach einem der Ansprüche 40 bis 42, dadurch gekennzeichnet, daß der Zuschlagstoff ein wasserspeichernder Zuschlagstoff ist.

**44.** Kultursubstrat nach einem der Ansprüche 40 bis 43, dadurch gekennzeichnet, daß der Zuschlagstoff ein Ionenaustauscheigenschaften aufweisender Zuschlagstoff ist.

**45.** Kultursubstrat nach einem der Ansprüche 37 bis 44, dadurch gekennzeichnet, daß dieses einen Pflanzennährstoffträger umfaßt.

**46.** Kultursubstrat nach einem der Ansprüche 37 bis 45, dadurch gekennzeichnet, daß dieses einen Spurennährstoffträger umfaßt.

**47.** Verfahren zum Herstellen eines Kultursubstrats für Pflanzen, dadurch gekennzeichnet, daß in einem ersten Schritt das Basismaterial gemäß den Ansprüchen 16 bis 36 hergestellt wird.

**48.** Verfahren nach Anspruch 47, dadurch gekennzeichnet, daß zu dem Basismaterial ein Zuschlagstoff entsprechend einem oder mehreren der Ansprüche 40 bis 44 zugegeben wird.

**49.** Verfahren nach Anspruch 47 oder 48, dadurch gekennzeichnet, daß zu dem Basismaterial ein Pflanzennährstoffträger zugegeben wird.

**50.** Verfahren nach einem der Ansprüche 47 bis 49, dadurch gekennzeichnet, daß zu dem Basismaterial ein Spurennährstoffträger zugegeben wird.

**51.** Verfahren nach einem der Ansprüche 49 oder 50, dadurch gekennzeichnet, daß das Material auf seiner Oberfläche mit einem Pflanzennährstoffträger und/oder einem Spurennährstoffträger versehen ist und daß durch Zugabe des Pflanzennährstoffträgers und/oder des Spurennährstoffträgers zu dem Basismaterial eine Anpassung an eine spezielle Verwendung des Kultursubstrats für spezielle Pflanzen durchgeführt wird.

52. Kultursubstrat für Pflanzen, dadurch gekennzeichnet, daß dies einen Anteil von mechanisch zerfaserten unvertorften Pflanzenfasern von mehr als 10 Vol.% umfaßt.

53. Kultursubstrat nach Anspruch 52, dadurch gekennzeichnet, daß der Anteil der mechanisch zerfaserten unvertorften Pflanzenfasern mehr als 30 Vol.% beträgt.

54. Kultursubstrat nach Anspruch 53, dadurch gekennzeichnet, daß der Anteil der mechanisch zerfaserten unvertorften Pflanzenfasern mehr als 50 Vol.% beträgt.

55. Kultursubstrat nach einem der Ansprüche 52 bis 54, dadurch gekennzeichnet, daß dieses pflanzenwachstumsverbessernde Substanzen nach einem der Ansprüche 5 bis 15 umfaßt.

56. Kultursubstrat nach einem der Ansprüche 52 bis 55, dadurch gekennzeichnet, daß dieses Zuschlagstoffe nach einem der Ansprüche 40 bis 44 umfaßt.

57. Verfahren zur Herstellung des Kultursubstrats nach einem der Ansprüche 52 bis 56, dadurch gekennzeichnet, daß die Pflanzenfasern durch mechanische Auffaserung von unvertorftem Pflanzenmaterial hergestellt werden.

58. Verfahren nach Anspruch 57, dadurch gekennzeichnet, daß das Pflanzenmaterial durch Einwirkung von Scherkräften bei einer Temperatur von mehr als 60° C mechanisch zu unvertorften Pflanzenfasern aufgefasert wird.

59. Verfahren nach Anspruch 58, dadurch gekennzeichnet, daß das Pflanzenmaterial in einer Extrudermaschine zu Pflanzenfasern mechanisch aufgefasert wird.

60. Verfahren nach einem der Ansprüche 57 bis 59, dadurch gekennzeichnet, daß pflanzenwachstumsverbessernde Substanzen vor der mechanischen Auffaserung des Pflanzenmaterials zu den Pflanzenfasern zugegeben werden.

61. Verfahren nach einem der Ansprüche 57 bis 60, dadurch gekennzeichnet, daß pflanzenwachstumsverbessernde Substanzen nach der mechanischen Auffaserung des Pflanzenmaterials zu Pflanzenfasern zugegeben werden.

62. Verfahren nach einem der Ansprüche 57 bis 61, dadurch gekennzeichnet, daß pflanzenwachstumsverbessernde Substanzen in flüssiger Form zugegeben werden.

63. Verfahren nach einem der Ansprüche 57 bis 62, dadurch gekennzeichnet, daß pflanzenwachstumsverbessernde Substanzen in fester Form zugegeben werden.

64. Substrat für erdlose Hydrokulturen, dadurch gekennzeichnet, daß dieses ein Basismaterial nach einem der Ansprüche 1 bis 36 umfaßt.

65. Substrat für erdlose Hydrokulturen, dadurch gekennzeichnet, daß dieses ein Kultursubstrat nach einem der Ansprüche 37 bis 63 umfaßt.

66. Substrat nach Anspruch 64 oder 65, dadurch gekennzeichnet, daß das Basismaterial oder das Kultursubstrat mit wasserunlöslichen pflanzenwachstumsverbessernden Substanzen versehene Pflanzenfasern aufweist.

67. Substrat nach einem der Ansprüche 64 bis 66, dadurch gekennzeichnet, daß das Basismaterial oder das Kultursubstrat auf konventionelle Nährlösungen für Hydrokulturen im wesentlichen substanzaustauschneutral reagiert.

68. Substrat nach Anspruch 67, dadurch gekennzeichnet, daß das Basismaterial oder das Kultursubstrat auf konventionelle Nährlösung für Hydrokulturen im wesentlichen stickstoffaufnahmeneutral reagiert.

69. Substrat nach einem der Ansprüche 64 bis 68, dadurch gekennzeichnet, daß die Hydrokultur eine Sackkultur mit automatischer Tropfbewässerung ist.

70. Substrat nach Anspruch 69, dadurch gekennzeichnet, daß die automatische Tropfbewässerung im geschlossenen System erfolgt.

71. Substrat nach einem der Ansprüche 64 bis 70, dadurch gekennzeichnet, daß dieses in einer Folienverpackung blockförmig abgepackt ist.

72. Substrat nach Anspruch 71, dadurch gekennzeichnet, daß dieses in einen allseits geschlossenen Foliensack abgepackt ist.

Europäisches
Patentamt

**EUROPÄISCHER RECHERCHENBERICHT**

Nummer der Anmeldung

EP    92 10 3539
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 145 706 (HILLIER NURSERIES) | 1,6,7,9, 10,11, 16,22, 28,29, 31,36, 38,39,40 | C05F11/00 A01G31/00 |
| | * Ansprüche 1,3,4,6,7,10 * | 41,42, 47-49, 53-57, 61,62 | |
| | * Seite 1, Zeile 28 - Zeile 64 * | | |
| A | | 37,52, 64,65 | |
| | --- | | |
| X | FR-A-2 510 593 (GUIDAT, GILBERT) | 1,2,9, 11,16, 17,22, 31,36, 64,66 | |
| A | * Ansprüche 1-3,9 * | 5,6,19, 27,28,67 | |
| | * Seite 2, Zeile 30 - Seite 4, Zeile 10 * | | **RECHERCHIERTE SACHGEBIETE (Int. Cl.5)** |
| | --- | | |
| X | EP-A-0 409 186 (TAKEDA GARDEN PRODUCTS CO., LTD.) | 1,4, 6-11, 14-16, 19, 21-23, 25,26, 28-31 34-36 | C05F A01G |
| A | * Ansprüche 1,2,3,5,6 * | 5,24, 37-45, 47-49, 51-57, 61-66, 69-72 | |
| | * Seite 3, Zeile 5 - Zeile 21 * * Seite 4, Zeile 16 - Zeile 27 * | | |
| | --- | | |

Der vorliegende Recherchenbericht wurde für alle Patentansprüche erstellt

| Recherchenort | Abschlußdatum der Recherche | Prüfer |
|---|---|---|
| DEN HAAG | 01 JUNI 1992 | RODRIGUEZ FONTAO M.B |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
    Dokument

Europäisches
Patentamt

**EUROPÄISCHER RECHERCHENBERICHT**

Nummer der Anmeldung

EP    92 10 3539
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 248 780 (ASSOCIATION FORET-CELLULOSE AGOCEL,) | 1,4, 8-11,16, 19,21, 22,25, 26,30, 31,36 | |
| A | * Ansprüche 1-3,5-8,10 * | 5-7, 37-42, 44-49, 52-57, 62-66, 69,72 | |
| | * Seite 2, Zeile 3 - Zeile 24 * * Seite 3, Zeile 26 - Zeile 31 * --- | | |
| P,X | WO-A-9 114 358 (INSTITUT FÜR UMWELTPFLEGE AG.) | 1-3,6, 8-14, 16-18, 20,25, 26,28, 30-34,36 | |
| P,A | * Ansprüche 1-9,15-18 * | 4,21-24, 29,35, 37-60, 62-72 | RECHERCHIERTE SACHGEBIETE (Int. Cl.5) |
| | * Seite 7, Zeile 28 - Seite 8, Zeile 17 * --- | | |
| P,A | GB-A-2 237 012 (CLEEVE, RICHARD JOHN) | 1,5,6, 8-16,22, 23, 29-57, 62-72 | |
| | * Ansprüche 1,2,5,6,13,17 * * Seite 2, Zeile 3 - Seite 4, Zeile 28 * ----- | | |

Der vorliegende Recherchenbericht wurde für alle Patentansprüche erstellt

| Recherchenort | Abschlußdatum der Recherche | Prüfer |
|---|---|---|
| DEN HAAG | 01 JUNI 1992 | RODRIGUEZ FONTAO M.B |

EPO FORM 1503 03.82 (P0403)